# EUROPEAN PATENT APPLICATION

(11) **EP 4 749 567 A1**
(43) Date of publication of application: **27.05.2026**
(21) Application number: 25216684.8
(22) Date of filing: 18.11.2025
(51) Int. Cl.: G06T 7/00, B64F 5/60, G01B 11/16, G01N 3/08

(54) **MEASURING DEFORMATION OF STRUCTURE**

(30) Priority: 25.11.2024 GB 202417239
(71) Applicant: Airbus Operations Limited, Bristol BS34 7PA (GB)
(72) Inventor: WALL, Jai, Bristol, BS34 7PA (GB)
(74) Representative: Ribeiro, James Michael

(57) **Abstract**

A method of measuring deformation of a structure by image correlation, the method comprising: generating a non-periodic tiling with a set of prototiles; generating a non-periodic pattern based on the non-periodic tiling; applying the non-periodic pattern to a structure; generating a reference image of the non-periodic pattern on the structure; generating a deformed image of the non-periodic pattern on the structure; and measuring deformation of the structure by comparing the deformed image with the reference image.

## Description

### FIELD OF THE INVENTION

The present invention relates to a method of measuring deformation of a structure by image correlation.

### BACKGROUND OF THE INVENTION

Digital Image Correlation (DIC) is used across many fields as a non-destructive and cheap method to determine strain in a material under load. By coating the surface of the material in a 'speckle pattern' and setting up a camera connected to analysis software, the displacement and strain can be determined.

More details of speckle patterns can be found online at https://correlated.kavako.com/article/38-speckle-pattern-fundamentals as available online on 9 October 2024.

A large amount of prior work surrounding DIC and speckle patterns exists, largely studying and optimising the spread and clarity of dot/line patterns for maximum accuracy of strain. See for example: Lecompte, D., Bossuyt, S., Cooreman, S., Sol, H. and Vantomme, J., 2007, June. Study and generation of optimal speckle patterns for DIC. In Proceedings of the annual conference and exposition on experimental and applied mechanics (Vol. 3, pp. 1643-1649).

Currently, most applications of speckle patterns onto test specimens are done manually using black spray paint or white paint embedded with black speckle particulates. This method assumes that the final distribution will be random enough, but it is not guaranteed. If the speckle surface is not random enough (i.e. if there are duplicate distribution areas on a surface or varying intensity) the surface must be modified. This also limits control over distribution parameters. Additionally, once applied, spray painted patterns are assumed to be fixed, but over long test durations there is a risk of pattern degradation that can lead to either inaccurate measurements or calibration issues.

Speckle image generators may use a random noise-generating algorithm to reduce the dot uniformity [Orteu, J.J., Garcia, D., Robert, L. and Bugarin, F., 2006, September. A speckle texture image generator. In Speckle06: speckles, from grains to flowers (Vol. 6341, pp. 104-109). SPIE] which is advantageous over just spray paint as the distribution randomness can be calculated before application and the applied pattern can be compared against the digitally designed pattern for calibration. However, this does not guarantee randomness, so an additional algorithm must be used to check 'randomness' while also still fitting a Gaussian distribution, which is a fundamental assumption in DIC software.

### SUMMARY OF THE INVENTION

A first aspect of the invention provides a method of measuring deformation of a structure by image correlation, the method comprising: generating a non-periodic tiling with a set of prototiles; generating a non-periodic pattern based on the non-periodic tiling; applying the non-periodic pattern to a structure; generating a reference image of the non-periodic pattern on the structure; generating a deformed image of the non-periodic pattern on the structure; and measuring deformation of the structure by comparing the deformed image with the reference image.

Optionally the method further comprises: dividing the reference image into a set of reference subsets, wherein each reference subset is not repeated in the reference image; dividing the deformed image into a set of deformed subsets, wherein each deformed subset is not repeated in the deformed image; and measuring deformation of the structure by comparing one or more pairs of subsets, each pair of subsets comprising a reference subset and a corresponding deformed subset.

Optionally the method further comprises checking that each reference subset is not repeated in the reference image.

Optionally the method further comprises generating an expected reference image based on the non-periodic pattern and knowledge of a reference shape of the structure; and checking the reference image by comparing it with the expected reference image.

Optionally the set of prototiles comprises an aperiodic set of prototiles.

Optionally the aperiodic set of prototiles comprises: a Spectre tile; a plurality of Penrose tiles or a plurality of Ammann tiles.

Optionally the non-periodic pattern comprises marks at vertices of the non-periodic tiling.

Optionally the non-periodic pattern comprises lines at edges of the non-periodic tiling.

### BRIEF DESCRIPTION OF THE DRAWINGS

Embodiments of the invention will now be described with reference to the accompanying drawings, in which:
Figure 1 is a plan view of an aircraft;
Figure 2 shows a system for measuring deformation of a structure by image correlation;
Figure 3 shows a method of measuring deformation of a structure by image correlation;
Figure 4 shows a Spectre prototile;
Figure 5 shows a first non-periodic tiling based on the prototile of Figure 4;
Figure 6 shows a second non-periodic tiling based on the prototile of Figure 4; and
Figure 7 shows a pattern based on the non-periodic tiling of Figure 6.

### DETAILED DESCRIPTION OF EMBODIMENT(S)

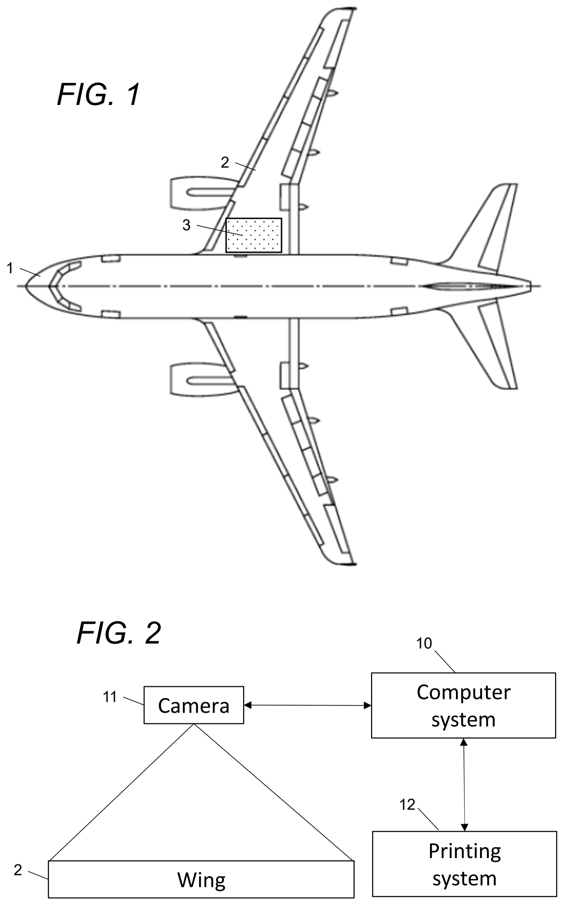

Figure 1 shows an aircraft 1 with a fuselage and a pair of wings. Various parts of the aircraft require structural testing. A structural testing process will be described below with reference to one of the aircraft wings, but this is by way of example only and other (e.g. smaller) components of the aircraft may be structurally tested by a similar process.

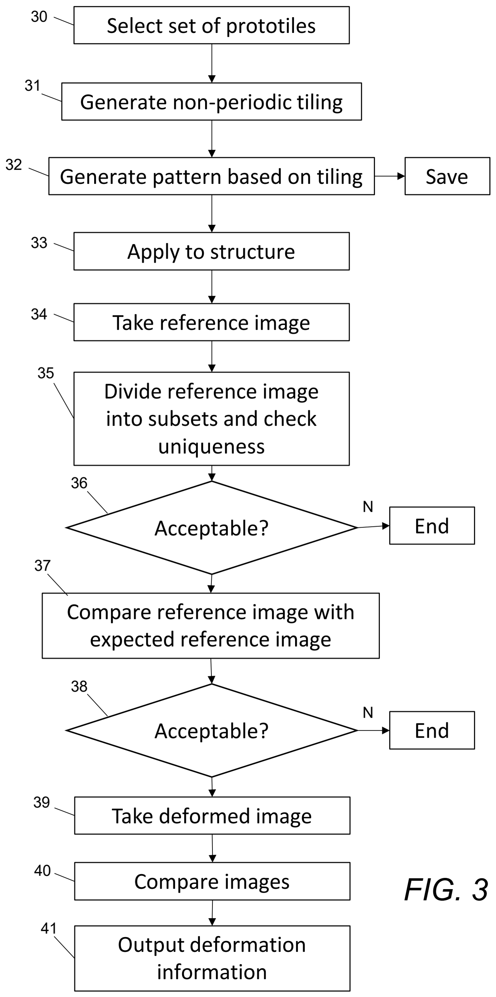

One of the wings 2 has a pattern 3 which is applied by the system of Figure 2 so it can be used in a process of Digital Image Correlation (DIC) as shown in Figure 3.

The system of Figure 2 comprises a computer system 10, a camera 11 and a printing system 12.

Referring to Figure 3, the computer system 10 is first operated to select a set of prototiles in step 30, using DIC software.

Preferably the set of prototiles comprises an aperiodic set of prototiles such as a Spectre tile; a set of Penrose tiles or a set of Ammann tiles. An aperiodic set of prototiles is a set of prototiles where all possible tilings of that set are non-periodic. In another definition, tiles that only fill a plane without any arbitrarily large section repeating itself are known as aperiodic.

Alternatively the set of prototiles could consist of a chevron prototile, or another prototile (or plurality of prototiles) which is not aperiodic - that is, it can be arranged in either a periodic tiling or a non-periodic tiling.

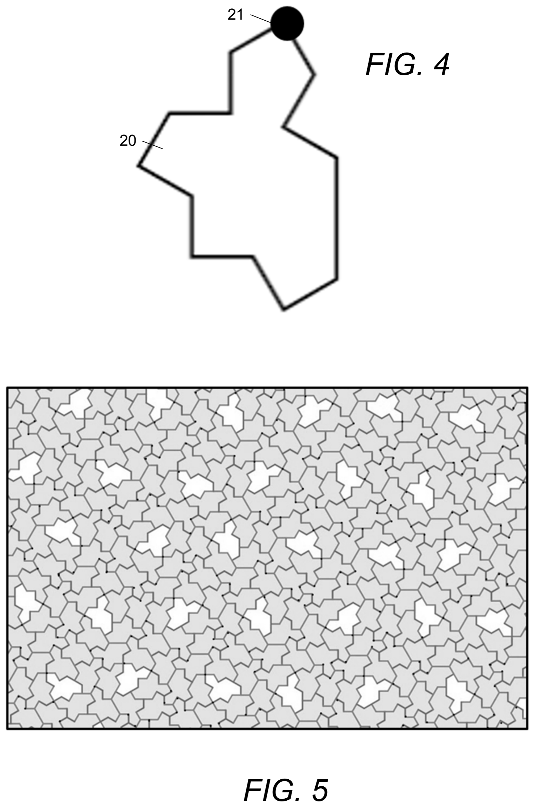

An example of a set of prototiles is shown in Figure 4. In this case the set of prototiles consists of a single Spectre tile 20. Note that the term 'set of prototiles' is used here to denote a group of prototiles with one or more members.

The Spectre tile 20 has a mark, in this case a dot 21, at one vertex. In other examples the (or each) prototile may have a dot (or other mark) at more than one vertex and/or a dot in a non-vertex position, such as a point equidistant between two vertices.

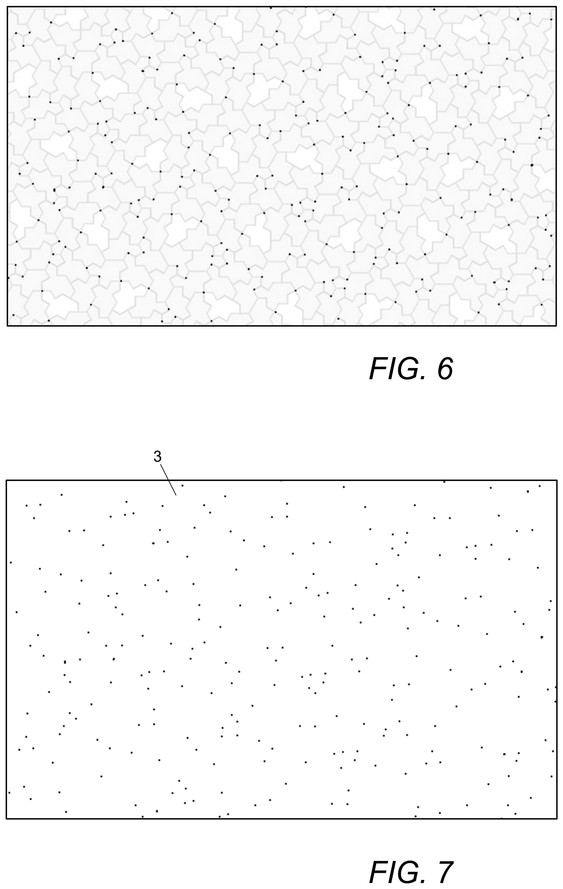

In step 31, the computer system 10 generates a non-periodic tiling with the selected set of prototiles. A first example of a non-periodic tiling generated in step 31 with the Spectre tile of Figure 4 is shown in Figure 5. A second example is shown in Figure 6. The term "tiling" refers to a specific arrangement of prototiles.

In step 32, the computer system 10 generates a non-periodic pattern based on the non-periodic tiling and saves it for future use. Figure 7 gives an example of a non-periodic pattern 3 which is based on the non-periodic tiling of Figure 6 and applied to the wing 2 of Figure 1. In this case the non-periodic pattern 3 consists of a pattern of dots which remain after the lines representing tile edges in Figure 6 have been removed.

Optionally the non-periodic pattern generated in step 32 could comprise a pattern of lines coinciding with edges of the tiles, a combination of lines and dots, or any other non-periodic pattern based on the non-periodic tiling.

Parameters of the pattern (for example the number of tiles, the tile-size, the number of dots per prototile etc.) can be altered to suit the structure 2.

In step 33 the non-periodic pattern 3 of Figure 7 is applied to the structure (in this case the wing 2) using the printing system 12 of Figure 2. The non-periodic pattern can applied in a number of ways, including applying a paint, ink or other coating, or by laser engraving. The non-periodic pattern may be applied by projecting an image of the non-periodic pattern onto the structure and using the projected image as a template for a human to apply paint, ink, or any other coating or mark. Alternatively the non-periodic pattern may be applied automatically by a printing head which scans over the structure and selectively applies the pattern 3 as required, under control of the computer system 10.

In step 34 a reference image of the non-periodic pattern on the structure is generated by an imaging system. In this example the imaging system is a single camera 11 with a field of view which covers the whole pattern 3. Optionally the reference image may be generated by scanning the camera 11 over the structure, or it may be compiled from a set of images acquired by multiple cameras pointing at different parts of the pattern.

In steps 35 and 36 the reference image of the non-periodic pattern is divided into subsets and the uniqueness of each subset is checked. The term "facet" instead of "subset" may also be used, but here the term "subset" is used.

In step 35 the reference image is divided into a set of reference subsets, wherein each reference subset is not repeated in the reference image. The size(s) of the prototile(s) relative to the sizes of the subsets can be selected to ensure that there are sufficient tiles within each subset to ensure that the subset is unique (i.e. not repeated in the reference image). The use of prototiles in the generation of the non-periodic pattern has the advantage that it enables the density of the non-periodic pattern to be controlled consistently across the full area of the reference image, unlike a random pattern where the density cannot be controlled easily.

In step 36, the computer system 10 checks that each reference subset is not repeated in the reference image.

If the uniqueness check of steps 35, 36 is passed, then a calibration is performed in steps 37, 38 by generating an expected reference image (based on the known non-periodic pattern and knowledge of an initial undeformed shape of the structure 2) and checking the reference image by comparing it with the expected reference image. The output of this step 37 is "delta" information which can be used as a validation step which checks that there are sufficiently few errors in the application of the pattern by the printing system 12.

It will not matter if there is a small "delta", as long as the DIC software is aware of the difference (in fact, these differences would contribute to the feature matching).

At a later time (which may be some time later, after the structure 2 has deformed as a result of being exposed to forces, temperature changes etc.) a deformed image of the non-periodic pattern 3 on the structure 2 is taken by the camera 11 at step 39. Then at step 40 the deformed image is compared with the reference image by the computer system 10.

In the comparison step 40, the deformed image is divided into a set of deformed subsets, wherein each deformed subset is not repeated in the deformed image; then deformation of the structure 2 is measured by comparing pairs of subsets, each pair of subsets comprising a reference subset and a corresponding deformed subset.

Finally in step 41, the computer system 10 calculates and outputs deformation information based on the comparison step 40. This deformation information provides a measurement which is indicative of deformation of the structure 2 between the time that the reference image was taken at step 34, and the time that the deformed image was taken at step 39.

The method of Figure 3 may incorporate further or alternative aspects of known DIC methods, as disclosed at digitalimagecorrelation.org, as available online on 9 October 2024, the disclosure of which is incorporated herein by reference.

The non-periodic pattern 3 based on a set of prototiles is non-repeating (like a random pattern) but predictable and determined computationally (unlike a random pattern).

Advantages of the use of such a non-periodic pattern based on a set of prototiles include the following.

Firstly, the parameters of the pattern can be tailored easily, for instance to vary intensity distribution and spatial frequency. This enables rapid prototyping and optimisation of patterns for specific experimental requirements, as well as consistent patterns for clear comparisons across different test specimens.

Further, the density of the pattern can be controlled consistently across the full area of the pattern 3, unlike a random pattern where the density cannot be controlled easily.

Further, the pattern facilitates optimised feature matching: by using this technique and arranging the pattern in a specific configuration, researchers can create patterns that maximise correlation strength and minimise ambiguity in the DIC software. This optimisation improves the robustness and accuracy of DIC algorithms, particularly in challenging imaging conditions or complex deformation scenarios.

Further, the pattern provides better noise-resistance. Since the distribution of features (for instance dots or lines) in the pattern is predictable and calculated using positions of surrounding features, the measured position can be compared against the expected position of that same feature. DIC software using such patterns should then exhibit a higher resistance to noise and environmental factors compared to random patterns for this same reason: knowing where features should be placed also tells where features should not be placed. That is, when not under load, if the DIC software detects a feature where it knows there should not be one, it can ignore it. This noise resilience enhances the reliability and consistency of DIC measurements, especially in noisy imaging environments or with low-contrast surfaces, hence reducing the need for strict control of environmental factors such as lighting and dust.

Further, the pattern provides for repeatable experiments. Deterministic tiling patterns offer repeatability and consistency across multiple experiments or trials. Once the tiling layout is established, it can be replicated precisely for deformation tests, ensuring uniformity in speckle distribution and facilitating more precise comparative analysis between test pieces and between datasets. This repeatability is particularly valuable in longitudinal studies or quality control applications where consistency and reproducibility are paramount.

Finally, the pattern can provide cost savings. The method of Figure 3 is less computationally intense than other proposed speckle image design solutions. Each individual dot/line is determined by existing dots/lines so image generation should be relatively straightforward. The pattern is also guaranteed to have an aperiodic distribution, so no additional checks are necessary (beyond the checks at steps 36 and 38) reducing computational resources.

Costs can also be saved where maintenance for calibration and paint quality would traditionally be necessary, because an applied pattern can be compared to the digital version (as in steps 37, 38 of Figure 3). Here, long-term costs associated with surface preparation and reapplication are reduced. Costs associated with environmental control can also be reduced.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A method of measuring deformation of a structure by image correlation, the method comprising:
generating a non-periodic tiling with a set of prototiles;
generating a non-periodic pattern based on the non-periodic tiling;
applying the non-periodic pattern to a structure;
generating a reference image of the non-periodic pattern on the structure;
generating a deformed image of the non-periodic pattern on the structure; and
measuring deformation of the structure by comparing the deformed image with the reference image.

2. A method according to claim 1, further comprising:
dividing the reference image into a set of reference subsets, wherein each reference subset is not repeated in the reference image;
dividing the deformed image into a set of deformed subsets, wherein each deformed subset is not repeated in the deformed image; and
measuring deformation of the structure by comparing one or more pairs of subsets, each pair of subsets comprising a reference subset and a corresponding deformed subset.

3. A method according to claim 2, further comprising checking that each reference subset is not repeated in the reference image.

4. A method according to any preceding claim, further comprising generating an expected reference image based on the non-periodic pattern and knowledge of a reference shape of the structure; and checking the reference image by comparing it with the expected reference image.

5. A method according to any preceding claim, wherein the set of prototiles comprises an aperiodic set of prototiles.

6. A method according to claim 5, wherein the aperiodic set of prototiles comprises: a Spectre tile; a plurality of Penrose tiles or a plurality of Ammann tiles.

7. A method according to any preceding claim, wherein the non-periodic pattern comprises marks at vertices of the non-periodic tiling.

8. A method according to any preceding claim, wherein the non-periodic pattern comprises lines at edges of the non-periodic tiling.
